# EUROPEAN PATENT SPECIFICATION

(11) **EP 1 793 977 B1**
(45) Date of publication and mention of the grant of the patent: **11.02.2009**
(21) Application number: 05792133.0
(22) Date of filing: 21.09.2005
(51) Int. Cl.: B29C 51/12, B65D 39/08

(54) **METHOD FOR FIXING A COMPONENT TO THE WALL OF A FUEL TANK**
VERFAHREN ZUR BEFESTIGUNG EINES BAUTEILS AN DER WAND EINES KRAFTSTOFFTANKS
PROCÉDÉ DE FIXATION D'UN COMPOSANT SUR LA PAROI D'UN RÉSERVOIR DE CARBURANT

(30) Priority: 23.09.2004 FR 0410081
(43) Date of publication of application: 13.06.2007
(73) Proprietor: Inergy Automotive Systems Research (Société Anonyme), 1120 Bruxelles (BE)
(72) Inventor: CRIEL, Bjorn, B-9820 Merelbeke (BE)
(74) Representative: Jacques, Philippe
(86) International application number: PCT/EP2005/054714
(87) International publication number: WO 2006/032672

(56) References cited:
- WO-A-20/04031044
- WO-A-20/04062889
- DE-A1- 10 010 900
- US-A- 5 326 514
- US-A1- 2003 047 563
- US-B1- 6 606 980

## Description

The present invention relates to a method for fixing a component on the wall of a fuel tank.

Fuel tanks onboard vehicles of various kinds generally have to meet imperviousness and permeability standards in relation to the type of use for which they are designed and the environmental requirements that they have to satisfy. Both in Europe and throughout the world we are currently experiencing a considerable tightening of the requirements concerned with limiting the emissions of pollutants into the atmosphere and into the environment in general. The design of fuel tanks is therefore evolving quickly towards techniques capable of better guaranteeing the imperviousness and safety under varying conditions of use. Furthermore, attempts have also been made to minimize the losses originating from the pipes and various accessories associated with the tanks. The question of imperviousness arises in particular in the case of accessories mounting flanges (also known as "flanges"), the design of which has been adapted for this purpose. It also arises in terms of the electrical or electronic connections, the lines for venting, degassing, recirculation to the top of the filling pipe, etc., of leakage diagnosis (OBD for On Board Diagnosis) and fuel feed, which have to pass through the wall of the tank in order to lead respectively to the canister and to the engine... in fact, with any accessory that has to be connected to and pass through the wall of the tank.

Thus, for example, WO 2004/031044 in the name of the Applicant Company discloses an accessory mounting flange made of injection-moulded plastic bearing a screw thread at its periphery and intended to close off an opening of a hollow body - for example a tank - made of thermoplastic and formed of shells. The mounting flange, which is equipped with a seal placed in a groove hollowed at its periphery, is positioned around the periphery of an opening in the wall of one shell of the tank, then a ring is screwed onto its screw thread, all this prior to welding the shells together.

Fitting and fixing the mounting flange as these operations are described in that patent application are possible only for a method of manufacture of a hollow body from several shells moulded and cooled separately then assembled, this being because the flange comprises a base plate the diameter of which exceeds that of the opening and which is intended to press against the internal periphery of this opening. If the hollow body were moulded as a single piece, it would not actually be possible to fit and fix the mounting flange until after an additional opening, of a size larger than that of the base plate and therefore larger than that of the opening intended for fixing the mounting flange, had been cut in the wall of the hollow body.

The same problem arises with the ventilation and fuel feed lines, of which an often bulky part has to be introduced into the fuel tanks. It may also arise with accessories such as valves for example.

One solution that the Applicant Company has considered in an attempt at solving this problem is to introduce the aforementioned components (mounting flange, lines, valves, electrical connectors, etc.) into the parison of the tank during or before moulding this parison (i.e. before removing it from the mould in fact). Such a solution is for example shown in US 6606980 B1. However, the Applicant Company has found that, in this case, there is a not insignificant risk of damaging the said parison given the poor mechanical integrity of plastics in the molten state in general. The Applicant Company then found that it was possible to remedy this disadvantage by securing the component to the parison to prevent it from constituting a moving part liable to damage the said parison while it is in the molten state in the mould.

It is therefore an object of the invention to provide a method which allows a component to be fitted and fixed on the wall of a fuel tank made of plastic moulded as a single piece (in a single step on completion of which a single-piece tank is obtained without recourse to an additional step of assembling separate shells), and to do so without having to make an opening of adequate dimensions in the tank in order to be able to introduce the component into the tank and without damaging its wall.

To this end, the invention relates to a method for fixing a component onto a plastic fuel tank produced as a single piece by moulding, the said method comprising the following steps :
- a parison is introduced into a mould;
- it is pressed against the mould;
- at least part of the component is introduced into the parison and secured thereto;
- the tank is removed from the mould;
- an opening is made in the tank;
- the part of the component is detached from the tank through the said opening;
- this part of the component is fixed to the opening of the tank by means of an assembly member.

The term "fuel tank" is intended to denote a sealed tank able to store fuel under diverse and varying environmental and usage conditions. An example of this tank is the tank fitted to motor vehicles.

The fuel tank according to the invention is made of plastic.

The term "plastic" is intended to denote any material comprising at least one synthetic resin polymer.

All types of plastic may be suitable. Particularly suitable plastics come from the thermoplastics category.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, non-limitingly, random copolymers, linear block copolymers, other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials include those that exhibit polydispersion in their molecular weight.

In particular, polyolefins, thermoplastic polyesters, polyketones, polyamides and copolymers thereof may be used. A blend of polymers or copolymers may also be used, and a blend of polymer materials with inorganic, organic and/or natural fillers such as, for example, but non-limitingly, carbon, salts and other inorganic derivatives, natural fibres or polymeric fibres. It is also possible to use multilayer structures consisting of stacked layers bonded together comprising at least one of the polymers or copolymers described above.

One polymer which is often used is polyethylene. Excellent results have been obtained with high density polyethylene (HDPE).

The tank for which the component is intended may consist of a single layer of thermoplastic or of two layers. One or several other possible additional layers may, advantageously, consist of layers of a material that forms a barrier against liquids and/or gases. As a preference, the nature and thickness of the barrier layer are chosen to limit as far as possible the permeability to liquids and gases in contact with the interior surface of the tank. As a preference, this layer is based on a barrier resin, that is to say on a resin impermeable to the fuel, such as EVOH for example (a copolymer of ethylene and partially hydrolysed vinyl acetate). Alternatively, the tank may be subjected to a surface treatment (fluoration or sulphonation), the purpose of which is to render it impermeable to the fuel.

The component according to the invention may be a flange intended to close off (i.e. entirely plug) an opening of a fuel tank and to support any type of accessory mounted on the wall of such a tank. The flange is, in particular, well suited to supporting accessories which pass through the wall of the tank. It preferably comprises a base plate, generally of flattened shape, and a profiled part. The profiled part of the base plate is generally more or less orthogonal to the base plate of the flange. The base plate generally has a perimeter of circular shape and the profiled part generally has a substantially cylindrical shape. As a special preference, the flange is as described in the WO 2004/031044, i.e. the profiled part has a diameter such that it is able to pass through the opening in the tank while the base plate has a diameter greater than that of the opening, so that it can press against its interior periphery.

The flange according to this variant of the invention may be made of any material exhibiting adequate mechanical strength and chemical resistance (to the fuels). It is preferably made of metal or plastic. Plastics are preferred for their lightness of weight and ease of working. Any type of plastic may be suitable. As a preference, a plastic is chosen that has good dimensional stability in an environment subjected to temperature variations of the order of several tens of degrees Celsius. As a preference, a plastic is also chosen which has a dimensional stability that is little affected by contact with the liquids and gases liable to be contained in the tank. Polyacetals, polyamides, polyesters and polyvinyl halides give good results. Plastics which are particularly suitable are polyacetals and, in particular, POM (or polyoxymethylene). As a very special preference, the flange is made of injection-moulded plastic, that is to say has been shaped by a technique of injection-moulding under pressure in a mould.

Alternatively, the component according to the invention may be part of a ventilation line or fuel feed line and/or a valve (a ventilation valve, a non-return valve, etc.).

According to the invention, at least part of the component is introduced into the parison and secured to the latter before or during the moulding thereof. The term "parison" is intended to denote a preform, generally extruded and of more or less tubular or planar shape, which is intended to constitute the wall of the tank after moulding, i.e. after an operation that consists in forcing the parison, in the molten state, to the required shape and size using a mould in order to obtain a one-piece tank. The parison is generally moulded :
- either by blow-moulding, i.e. by expanding and pressing the parison against the walls of a mould using a pressurized fluid (generally air);
- or by thermoforming, i.e. by pressing the parison against the walls of a mould for example by suction (drawing a vacuum) behind these walls.

When the moulding is blow-moulding, the flange is preferably secured to the parison before the parison is blown. When moulding is by thermoforming, the flange is preferably secured to one of them after they have been thermoformed but before they have been assembled in the mould.

The part of the component may be secured to the parison by any appropriate means. In general, it entails recourse to a support. The term "support" is intended to denote a moving part able to be secured temporarily to the part of the component so that it can be introduced into the parison and allow it to be fixed there (secured to the interior wall thereof). The conventional blowing methods often use a blowing iron intended to introduce the pressurized fluid which is used for blowing into the mould, inside the parison. This iron may act as a support. Alternatively a robot arm may be used as a support. This solution is particularly suited to instances of moulding by thermoforming. Finally, in moulding methods calling upon a core, the latter may act as a support.

By virtue of the mobile nature of the support, the part of the component is positioned inside the parison and, as soon as the correct position has been reached, it is secured to the parison (to an interior surface portion thereof). Any securing technique known to those skilled in the art may be employed in the context of the invention. For example, use may be made of a clip which may be either secured to the part of the component then fixed to the parison (for example by welding or staking using the core), or incorporated into another accessory (gauge, valve, fuel trap, etc.) which is (will be) mounted on the parison. The latter variant is preferred because it saves on the additional cost of a part.

According to a variant, which yields good results, the part of the component is fixed to the parison indirectly, by way of a fixing frame which will remain secure to the wall of the tank throughout the life thereof. According to this variant, an opening is made in line with this frame to detach the part of the component from the said frame and the said part is then fixed to the periphery of this opening. The frame may therefore play a part in guiding/prepositioning during fitting; it may also prevent the part from rotating. Finally, the said frame may play an active part in the fuel tank (such as separating liquid from vapour for example).

Once the part of the component has been secured (directly or indirectly) to the parison, the support is withdrawn from the mould, as appropriate, and then the mould is closed again onto the parison in order to produce the tank.

Once the moulding operation is over, the tank is removed from the mould and generally left to set (cool) before the opening is made in its wall. This opening is generally made by machining - for example by cutting out a pellet. As a preference, the dimensions of this opening are more or less equal to (but slightly greater than) the exterior dimensions of the smallest part of the component (for example the profiled part of the flange in the preferred version described above) and smaller than the exterior dimensions of the largest part of the said flange (base plate in the same version).

Next, the part of the component is detached, through the opening in the wall of the tank, from the interior surface of the wall (or from its fixing frame) and fixed to the opening. To do that, as a preference, in instances where the component is a flange, the flange is positioned over the opening in such a way as to partially pass through the opening (preferably by way of its profiled part, if any). In that way, this part can extend out of the tank, on the convex side of its surface and allow the flange to be fixed to the opening of the tank by means of an assembly member which collaborates with this part.

According to one particular embodiment, the assembly member is a threaded ring and the flange is also equipped with a screw thread over at least part of its periphery, the threaded ring collaborating with the screw thread of the flange in order to fix it over the opening. The term "screw thread" is understood to denote a helical profile able to collaborate with a complementary helical profile in such a way as to produce a fixing by clamping. The term "ring" is understood to denote an annulus able at least partially to follow the periphery of the profiled (threaded) part of the flange.

The ring according to this variant of the invention may be produced in various materials such as metal, thermoset plastic or thermoplastic. As a preference, the ring is an item made of metal or injection-moulded thermoplastic. It is preferably based on the same material as the flange.

Advantageously, on the tank wall side, the ring has a shoulder intended to press against this wall. This configuration of the ring fixes the maximum tightening pressure of the ring on the screw thread of the flange when screwed until its shoulder butts against the wall of the tank. It thus prevents damage to the flange caused by overtightening.

The screw threads of the flange and of the ring according to this variant of the invention may have been obtained in various ways. They may, for example, have been produced at the same time as the flange and the ring, when they were moulded. They may equally have been produced after these parts were manufactured, by mechanical machining using a tool. As a preference, the screw threads will have been moulded at the same time as these parts.

The flange according to this variant of the invention is intended for mounting at least one accessory. For this purpose, it may be equipped with the accessory at any appropriate moment, preferably before it is fixed onto the opening in the tank. Thus, the accessory may be fixed onto the flange before it is introduced into the parison. However, advantageously, the flange is equipped with (an) accessory (or accessories) when it has been detached from the interior surface of the wall of the tank, but before it has been fixed onto the opening of the tank.

As a preference, in the method according to this variant of the invention, the flange is able to imperviously plug the opening made in the wall of the tank. Impervious plugging is understood to denote the ability to prevent the liquid and/or gas contained in the tank from communicating with the outside through the plugged opening under the normal temperature and pressure conditions of the tank.

According to one advantageous embodiment of the flange, imperviousness to liquids and gases is afforded by the insertion of a compressible seal between this flange and the wall of the tank situated near the opening. The seal used may have various forms. For example, it may be an O-ring. An O-ring of circular cross section has yielded good results.

The compressible seal is generally made of an elastomeric plastic or a rubber. As a preference, the material of the seal is chosen for its inertness with respect to the liquids and gases in contact with the concave surface of the tank.

The seal may be simply placed around the periphery of the surface of the flange which overhangs the opening in the wall of the tank. As a preference though, it is inserted in a groove hollowed around the periphery of the surface of the flange.

According to a particularly advantageous variant, the flange comprises a base plate and a profiled part; the seal is placed in a groove hollowed at the periphery of the base plate of the flange and intended to face the wall of the tank; the profiled part of the flange is passed through the opening in the tank and the base plate is pressed against the internal periphery of the wall of the tank so as to compress the seal by means of the assembly member.

In this variant, the seal is placed in the groove of the base plate either before the flange is secured to the interior surface of the parison or after it has been detached from the said surface but before it has been fixed over the opening of the tank.

Note that when the component is not a flange, but a pipette, a valve, part of a ventilation line or fuel feed line, etc., recourse to a seal as previously described is also advantageous in order to ensure that the opening is fixed/plugged imperviously in the wall of the tank.

Note also that in certain cases, before securing the part of the component to the interior wall of the tank, the said part may undergo modification (for example by machining). This may particularly be the case when the securing (temporary attachment of the component) to the wall is by welding and when the opening in the wall is machined actually around the welded part. In this case, the part of the component will comprise the wall part cut to make the opening and it will generally be desirable to remove this "lid" in order to render the part of the component operational.

With a view to obtaining an impervious fixing/plugging, it is generally advantageous to use parts the dimensions of which are constant and precise (and therefore which exhibit tight tolerances) so as to obtain a play-free fit. Given that the flange and the ring, if any, or the valve, the pipette, etc., are generally obtained by methods leading to tight tolerances (such as injection moulding for example), the location potentially affected by a problem with tolerances essentially consists of the periphery of the opening. In consequence, according to an advantageous variant of the method according to the invention, the periphery of the opening of the tank is compressed in order to obtain a determined and constant thickness of the said periphery before the part of the component is fixed to it.

This step of locally compressing the wall allows better control over the compression of the seal. This is because this seal is generally positioned between the part of the component made of a material that deforms little (for example by swelling) in the presence of fuel and the wall of the tank the thickness of which is locally controlled. In order to be effective, the local compression needs to be performed on molten plastic. In consequence, in a particularly advantageous manner, it is performed before the parison is moulded, when this parison is in the molten state. One particularly advantageous way is to use the support (robot arm, core, etc. as previously described) to perform this compression. When a core is used, one way of achieving this compression in a practical and effective manner is to equip the said core with a hydraulic or pneumatic ram connected to a counterform intended to flatten the region intended for fixing the component against the mould cavity uniformly. This then yields a more constant wall thickness and therefore more uniform compression of the seal.

Finally, one essential characteristic of the method according to the invention and which has already been mentioned earlier, consists in moulding the tank as a single piece. This does not, however, mean that the parison has to be made as a single piece. Thus, advantageously, the parison is in fact made up of two separate pieces, which may for example be two sheets.

However, in the case of a blow-moulded tank, as a preference, the parison is made up of two separate pieces resulting from the cutting apart of one and the same extruded parison as described in application EP 1110697 in the name of the Applicant Company, the content of which for this purpose is introduced by reference into this application. According to this variant, having extruded a single parison, this parison is cut along its entire length, along two diametrically opposed lines, to obtain two separate parts (sheets).

By comparison with the blow-moulding of two separately extruded sheets, the thickness of which is constant, this approach makes it possible to use parisons of variable thickness (i.e. of a thickness that is not constant along its length), which are obtained by virtue of an appropriate extrusion device (generally an extruder equipped with a position-adjustable mandrel die). Such a parison takes account of the reduction in thickness that occurs during the blowing at certain points of the parison, as a result of non-constant rates of deformation of the material in the mould.

As a preference, the two-part parison is blow-moulded in a mould comprising two cavities (or external parts) and one core (or internal part), this being done using a method similar to the one described in patent GB 1 410 215, the content of which for this purpose is introduced into this application by reference.

Thus, according to a particularly preferred variant of the method according to the invention, the steps preceding the blowing of the parison proceed as follows :
- a parison is extruded;
- the parison is cut into two separate sheets that are introduced between the cavities of the mould;
- at least a part of a component is secured to the core;
- the core is introduced into the parison and the mould is closed;
- the parison is pressed against the cavities of the mould by blowing through the core and/or drawing a vacuum behind the cavities;
- the part of the component is secured to the parison with the aid of the core;
- gases are released;
- the mould is opened to withdraw the core; and
- the parison is blown by injecting a pressurized fluid into it.

In this method it is, as mentioned previously, particularly advantageous to use the core to perform local compression of the material in the region intended to take the component, and to do so in the way described above.

The step of releasing the gases may be done in any appropriate way.

In general, the parison is first of all pierced (for example by punching it with a needle) and then the fluid is let out of the mould (for example using a valve). A degassing step is generally also planned before taking the tank out of the mould.

Alternatively, the tank may be moulded by thermoforming two sheets. Such a method generally leads to few or no non-uniform reductions in thickness and can therefore accommodate a parison of constant thickness (extruded sheets for example). Thus, according to another variant, the present invention relates to a method in which the moulding is performed by thermoforming in a mould comprising two cavities and in which the steps preceding the thermoforming proceed as follows :
- two sheets are extruded;
- they are preheated or they are taken straight off the extrusion line;
- they are thermoformed by drawing a vacuum behind the mould cavities;
- a part of the component is secured to a support;
- the support is introduced into one of the mould cavities;
- the part of a component is secured to the interior surface of the thermoformed sheet located there;
- the support is withdrawn and the two cavities are pressed together so as to close the mould and weld the two thermoformed sheets (half-shells) together.

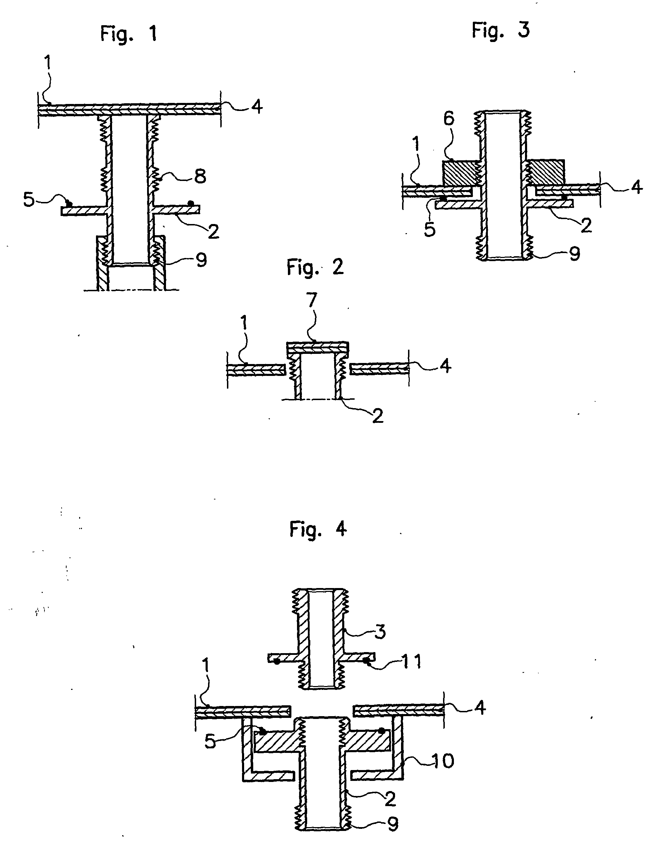

The present invention is illustrated non-limitingly by Figures 1 to 4.

Figures 1 to 3 illustrate three steps in the method of fixing a component (2) onto the wall (1) of a tank in the course of which method the component (2) is fixed to the wall (1) (Figure 1) then the wall portion (7) to which the component (2) is fixed is cut out and the profiled part of the component (2) is passed through the opening, towards the outside of the tank (Figure 2) and then finally, the component (2) is fixed to the wall (1) using a nut (6) provided with a screw thread which collaborates with a screw thread (8) present on the profiled part of the component (2) (Figure 3). This profiled part is also equipped with screw threads (9) at its ends to allow coupling to internal and external (for example ventilation) lines. An O-ring (5) provides sealing between the component (2) and the wall (1) of the tank.

The tank illustrated comprises a barrier layer (4) sandwiched between two non-barrier layers which give it its mechanical integrity.

The variant illustrated in these figures has the disadvantage that the upper part of the component (2) has to be machined in order to remove from it the wall part (1) to which it is secured. Figure 4 therefore illustrates a variant aimed at eliminating this disadvantage.

In Figure 4, the component (2) is secured to a fixing frame (10) which is itself secured to the wall (1) of the tank during the phase of blow-moulding the tank. The component (2) is able to move with respect to the frame (10), for example by sliding of ends of the component in grooves formed in the frame (10). After the blowing step, an opening is made in the wall (1), in line with the part of the component (2) and this part (2) is assembled with a second part of the component (3), for example through the collaboration of screw threads positioned on the profiled parts of each part of the component. This embodiment allows the part (2) to be prevented from experiencing rotational movement when the two screw threads are screwed together.

Furthermore, the part (2) exhibits a profiled part directed towards the inside of the tank and which passes through the support (10) at an appropriate angle so as to connect, for example, with a pipe of a ventilation circuit.

## Claims

1. Method for fixing a component (2) onto a plastic fuel tank (1) produced as a single piece by moulding, the said method comprising the following steps :
- a parison is introduced into a mould;
- it is pressed against the mould;
- at least part of the component is introduced into the parison and secured thereto;
- the tank is removed from the mould;
- an opening is made in the tank, **characterized in that**
- the part of the component is detached from the tank through the said opening;
- this part of the component is fixed to the opening of the tank by means of an assembly member.

2. Method according to the preceding claim, **characterized in that** the tank is based on HDPE and comprises a layer of a barrier material or has been subjected to a surface treatment with a view to rendering it impermeable to the fuel.

3. Method according to any one of the preceding claims, **characterized in that** the component is based on metal or on a plastic chosen from polyacetals, polyamides, polyesters and polyvinyl halides.

4. Method according to any one of the preceding claims, **characterized in that** the part of the component is secured to the parison by clipping to another accessory or to a fixing frame which is or will be secured to the parison.

5. Method according to any one of the preceding claims, **characterized in that** the component is a flange and the assembly member is a threaded ring, **in that** the flange is equipped with a screw thread over at least part of its periphery and **in that** the threaded ring collaborates with the screw thread of the flange to fix it to the opening.

6. Method according to the preceding claim, **characterized in that** the flange is equipped with accessories either before it is introduced into the parison or when it has been detached from the tank, before it is fixed onto the opening in the tank.

7. Method according to Claim 5 or 6, **characterized in that** the flange comprises a base plate and a profiled part, **in that** a compressible seal (5) is placed in a groove hollowed at the periphery of the base plate and intended to face the wall of the tank, **in that** the profiled part is made to pass through the opening in the tank and **in that** the base plate is pressed against the internal periphery of the wall of the tank in such a way as to compress the seal by means of the assembly member.

8. Method according to the preceding claim, **characterized in that** the seal (5) is placed in the groove of the base plate either before the flange is secured to the parison or after it is detached from the tank but before it is fixed onto the opening in the tank.

9. Method according to any one of the preceding claims, **characterized in that** the periphery of the opening of the tank is compressed in such a way as to obtain a determined constant thickness of the said periphery before fixing the part of the component to it.

10. Method according to any one of the preceding claims, **characterized in that** the moulding is performed by blowing in a mould comprising two cavities and a core, the steps preceding and including the blowing proceeding as follows :
- a parison is extruded;
- the parison is cut into two separate sheets that are introduced between the cavities of the mould;
- the part of the component is secured to the core;
- the core is introduced into the parison and the mould is closed;
- the parison is pressed against the cavities of the mould by blowing through the core and/or drawing a vacuum behind the cavities;
- the part of the component is secured to the parison with the aid of the core;
- gases are released;
- the mould is opened to withdraw the core; and
- the parison is blown by injecting a pressurized fluid into it.

11. Method according to any one of the preceding claims, **characterized in that** the moulding is performed by thermoforming in a mould comprising two cavities and **in that** the steps preceding and including the thermoforming proceed as follows :
- two sheets are extruded;
- they are preheated or they are taken straight off the extrusion line;
- they are thermoformed by drawing a vacuum behind the mould cavities;
- the part of the component is secured to a support;
- the support is introduced into one of the mould cavities;
- the flange is secured to the interior surface of the thermoformed sheet located there;
- the support is withdrawn and the two cavities are pressed together so as to close the mould and weld the two thermoformed sheets (half-shells) together.

## Patentansprüche

1. Verfahren zur Befestigung eines Bauteils (2) an einem einstückig durch Formen hergestellten Kraftstofftank (1) aus Kunststoff, wobei das Verfahren die folgenden Schritte umfasst:
- Einbringen eines Vorformlings in ein Formwerkzeug;
- Pressen des Vorformlings gegen das Formwerkzeug;
- Einbringen mindestens eines Teils des Bauteils in den Vorformling und Befestigen desselben daran;
- Entfernen des Tanks aus dem Formwerkzeug;
- Ausbilden einer Öffnung in dem Tank, **dadurch gekennzeichnet, dass**
- das Teil der Komponente durch die Öffnung von dem Tank getrennt wird;
- dieses Teil des Bauteils mittels eines Montageglieds an der Öffnung des Tanks befestigt wird.

2. Verfahren nach dem vorhergehenden Anspruch, **dadurch gekennzeichnet, dass** der Tank auf HDPE basiert und eine Schicht aus einem Sperrmaterial umfasst und einer Oberflächenbehandlung im Hinblick auf ihr Undurchlässigmachen für Kraftstoff unterzogen wurde.

3. Verfahren nach einem der vorhergehenden Ansprüche, **dadurch gekennzeichnet, dass** das Bauteil auf einem Metall oder einem Kunststoff basiert, der aus Polyacetalen, Polyamiden, Polyestern und Polyvinylhaliden ausgewählt ist.

4. Verfahren nach einem der vorhergehenden Ansprüche, **dadurch gekennzeichnet, dass** das Teil des Bauteils durch Festklemmen an einem anderen Zubehörteil oder an einem Befestigungsrahmen, der an dem Vorformling befestigt ist oder wird, an dem Vorformling angebracht wird.

5. Verfahren nach einem der vorhergehenden Ansprüche, **dadurch gekennzeichnet, dass** das Bauteil ein Flansch und das Montageglied ein Schraubring ist, dass der Flansch über mindestens einen Teil seines Umfangs mit einem Schraubgewinde versehen ist, und dass der Schraubring mit dem Schraubgewinde des Flansches zu seiner Befestigung an der Öffnung zusammenwirkt.

6. Verfahren nach dem vorhergehenden Anspruch, **dadurch gekennzeichnet, dass** der Flansch entweder vor seinem Einbringen in den Vorformling, oder wenn er von dem Tank getrennt worden ist, bevor er an der Öffnung in dem Tank befestigt wird, mit Zubehörteilen ausgestattet wird.

7. Verfahren nach Anspruch 5 oder 6, **dadurch gekennzeichnet, dass** der Flansch eine Grundplatte und einen profilierten Teil umfasst, dass eine komprimierbare Dichtung (5) in einer am Umfang der Grundplatte ausgebildeten Nut angeordnet wird und zur Wand des Tanks weisen soll, dass der profilierte Teil so ausgeführt ist, dass er durch die Öffnung im Tank passt, und dass die Grundplatte so gegen den Innenumfang der Wand des Tanks gedrückt wird, dass sie die Dichtung mittels des Montageglieds komprimiert.

8. Verfahren nach dem vorhergehenden Anspruch, **dadurch gekennzeichnet, dass** die Dichtung (5) entweder vor Befestigung des Flansches an dem Vorformling, oder nachdem er von dem Tank getrennt worden ist, aber bevor er an der Öffnung im Tank befestigt wird, in der Nut der Grundplatte platziert wird.

9. Verfahren nach einem der vorhergehenden Ansprüche, **dadurch gekennzeichnet, dass** der Umfang der Öffnung des Tanks so komprimiert wird, dass eine bestimmte konstante Dicke des Umfangs erhalten wird, bevor das Teil des Bauteils daran befestigt wird.

10. Verfahren nach einem der vorhergehenden Ansprüche, **dadurch gekennzeichnet, dass** das Formen durch Blasen in ein Formwerkzeug mit zwei Hohlräumen und einem Kern durchgeführt wird, wobei die Schritte vor dem und einschließlich des Blasen(s) wie folgt sind:
- Extrudieren eines Vorformlings;
- Schneiden des Vorformlings in zwei getrennte Flächengebilde, die zwischen den Hohlräumen des Formwerkzeugs eingeführt werden;
- Befestigen des Teils des Bauteils an dem Kern;
- Einbringen des Kerns in den Vorformling und Schließen des Formwerkzeugs;
- Drücken des Vorformlings gegen die Hohlräume des Formwerkzeugs durch Blasen durch den Kern und/oder Saugen eines Vakuums hinter die Hohlräume;
- Befestigen des Teils des Bauteils an dem Vorformling mit Hilfe des Kerns;
- Freisetzen von Gasen;
- Öffnen des Formwerkzeugs zum Zurückziehen des Kerns; und
- Blasen des Vorformlings durch Einspritzen von Druckfluid dort hinein.

11. Verfahren nach einem der vorhergehenden Ansprüche, **dadurch gekennzeichnet, dass** das Formen durch Thermoformen in einem Formwerkzeug mit zwei Hohlräumen durchgeführt wird und dass die Schritte vor dem und einschließlich des Thermoformen(s) wie folgt sind:
- Extrudieren von zwei Flächengebilden;
- ihr Vorwärmen oder ihr direktes Entnehmen aus der Extrusionslinie;
- ihr Thermoformen durch Saugen eines Vakuums hinter die Formwerkzeughohlräume;
- Befestigen des Teils des Bauteils an einem Träger;
- Einbringen des Trägers in einen der Formwerkzeughohlräume;
- Befestigen des Flansches an die Innenfläche des sich dort befindenden thermogeformten Flächengebildes;
- Herausziehen des Trägers und Zusammenpressen der beiden Hohlräume zum Schließen des Formwerkzeugs und Miteinanderverschweißen der beiden thermogeformten Flächengebilde (Halbschalen).

## Revendications

1. Procédé pour la fixation d'un composant (2) sur un réservoir (1) à carburant en matière plastique réalisé d'un seul tenant par moulage, ledit procédé comprenant les étapes suivantes :
- on introduit une paraison dans un moule ;
- on la plaque contre le moule ;
- on introduit au moins une partie du composant dans la paraison et on la solidarise à celle-ci ;
- on sort le réservoir du moule ;
- on réalise une ouverture dans le réservoir (1), **caractérisé en ce que**
- au travers de ladite ouverture, on désolidarise la partie du composant du réservoir ;
- on fixe la partie du composant sur l'ouverture du réservoir au moyen d'un organe d'assemblage.

2. Procédé selon la revendication précédente, **caractérisé en ce que** le réservoir est à base de PEHD et comprend une couche en matériau barrière ou a été soumis à un traitement de surface en vue de le rendre imperméable au carburant.

3. Procédé selon l'une quelconque des revendications précédentes, **caractérisé en ce que** le composant est à base de métal ou d'une matière plastique choisie parmi les polyacétals, les polyamides, les polyesters et les polyhalogénures de vinyle.

4. Procédé selon l'une quelconque des revendications précédentes, **caractérisé en ce que** la solidarisation de la partie du composant à la paraison a lieu par clipsage à un autre accessoire ou par fixation à un support qui est ou va être solidarisé à la paraison.

5. Procédé selon l'une quelconque des revendications précédentes, **caractérisé en ce que** le composant est une embase et l'organe d'assemblage est une bague filetée, que l'embase est munie d'un filet sur au moins une partie de sa périphérie et que la bague filetée coopère avec le filet de l'embase pour la fixer sur l'ouverture.

6. Procédé selon l'une quelconque des revendications précédentes, **caractérisé en ce qu'**on équipe l'embase d'accessoires soit avant son introduction dans la paraison, soit lorsqu'elle a été désolidarisée du réservoir, avant de la fixer sur l'ouverture dans le réservoir.

7. Procédé selon la revendication 5 ou 6, **caractérisé en ce que** l'embase comprend un socle et une partie profilée, qu'on dispose un joint compressible dans une gorge creusée à la périphérie du socle et destinée à faire face à la paroi du réservoir, qu'on fait traverser l'ouverture dans le réservoir par la partie profilée et qu'on appuie le socle sur le pourtour interne de la paroi du réservoir de manière à comprimer le joint au moyen de l'organe d'assemblage.

8. Procédé selon la revendication précédente **caractérisé en ce que** le joint (5) est disposé dans la gorge du socle soit avant la solidarisation de l'embase à la paraison, soit après sa désolidarisation du réservoir mais avant sa fixation sur l'ouverture dans le réservoir.

9. Procédé selon l'une quelconque des revendications précédentes, **caractérisé en ce qu'**on comprime le pourtour de l'ouverture du réservoir de manière à obtenir une épaisseur déterminée et constante dudit pourtour avant d'y fixer la partie du composant.

10. Procédé selon l'une quelconque des revendications précédentes, **caractérisé en ce que** le moulage est réalisé par soufflage dans un moule comprenant deux empreintes et un noyau, les étapes précédant et incluant le soufflage se déroulant de la manière suivante :
- on extrude une paraison ;
- on découpe la paraison en deux feuilles séparées que l'on introduit entre les empreintes du moule ;
- on solidarise la partie du composant avec le noyau ;
- on introduit le noyau à l'intérieur de la paraison et on ferme le moule ;
- on plaque la paraison sur les empreintes du moule par soufflage au travers du noyau et aspiration sous vide derrière les empreintes ;
- on solidarise la partie du composant à la paraison à l'aide du noyau ;
- on dégaze ;
- on ouvre le moule pour retirer le noyau ; et
- on procède au soufflage de la paraison en injectant un fluide sous pression à l'intérieur de celle-ci.

11. Procédé selon l'une quelconque des revendications précédentes, **caractérisé en ce que** le moulage est réalisé par thermoformage dans un moule comprenant deux empreintes et **en ce que** les étapes précédant et incluant le thermoformage se déroulent de la manière suivante:
- on extrude deux feuilles;
- on les préchauffe ou on les prélève en ligne de leur extrusion;
- on les thermoforme par aspiration sous vide derrière les empreintes du moule;
- on solidarise la partie du composant à un support;
- on introduit le support à l'intérieur d'une des empreintes du moule;
- on solidarise l'embase avec la surface intérieure de la feuille thermoformée qui s'y trouve;
- on retire le support et on accole les deux empreintes de manière à fermer le moule et à souder ensemble les deux feuilles thermoformées (demi-coquilles).
